## Europäisches Patentamt

## European Patent Office

## Office européen des brevets

(19)

(11) Numéro de publication: **0 190 242 B1**

(12) **FASCICULE DE BREVET EUROPEEN**

(45) Date de publication du fascicule du brevet:
**13.07.88**

(51) Int. Cl.⁴: **C 23 G 3/02,** C 25 D 7/06, C 25 F 7/00

(21) Numéro de dépôt: **85903840.8**

(22) Date de dépôt: **25.07.85**

(86) Numéro de dépôt international:
**PCT/FR 85/00206**

(87) Numéro de publication internationale:
**WO 86/00939 (13.02.86** Gazette **86/4)**

(54) **PROCEDE ET DISPOSITIF DE MISE EN CONTACT D'UNE BANDE EN CIRCULATION DANS UN LIQUIDE ET D'UN ROULEAU DE DEFLEXION.**

(30) Priorité: **26.07.84 FR 8411860**

(43) Date de publication de la demande:
**13.08.86 Bulletin 86/33**

(45) Mention de la délivrance du brevet:
**13.07.88 Bulletin 88/28**

(84) Etats contractants désignés:
**AT BE DE NL**

(56) Documents cités:
**DE - A - 2 147 182**
**US - A - 3 097 971**
**US - A - 4 441 975**

**Journal of the Iron and Steel Institute, vol. 201, No. 5, May 1983, W.G. Jaffrey et al.: "The support of thin steep strip on air cushions", see pages 401-407**

(73) Titulaire: **CLECIM, 107 boulevard de la Mission Marchand, F-92400 Courbevole (FR)**

(72) Inventeur: **DAMIRON, Pierre, Marie, 124, avenue Victor Hugo, F-75016 Paris (FR)**
Inventeur: **LEGOUPIL, Jean-Luc, 6, rue des Cerisoles, F-75008 Paris (FR)**

(74) Mandataire: **Phélip, Bruno et al, c/o Cabinet Harlé & Phélip 21, rue de la Rochefoucauld, F-75009 Paris (FR)**

ACTORUM AG

## Description

L'invention concerne un procédé et un dispositif de mise en contact d'une bande en circulation à grande vitesse dans un liquide et d'un rouleau de déflexion permettant d'éviter la formation d'une couche de liquide interposée entre la bande et le rouleau.

Par exemple, pour le dégraissage électrolytique d'une tôle ou d'un feuillard, on cherche à faire passer cette bande à très grande vitesse entre des électrodes immergées dans un liquide actif servant d'électrolyte. Cet électrolyte peut être par exemple une solution alcaline et dans ce cas, les électrodes produisent un dégagement gazeux d'hydrogène ou d'oxygène sur les faces de la tôle lors de son passage entre les électrodes, cette tôle constituant elle-même une électrode antagoniste des électrodes fixes entre lesquelles elle se déplace. Le dégagement gazeux accélère considérablement le dégraissage dans le liquide actif si bien qu'il est possible, lorsque les conditions opératoires sont choisies de façon adéquate, de faire passer la bande de tôle ou de feuillard à très grande vitesse, dans l'électrolyte, entre les électrodes.

L'électrolyte est généralement contenu dans un bac dans lequel les électrodes sont immergées et dans lequel on ménage des moyens pour conduire la tôle sur son parcours dans l'électrolyte. De tels moyens sont constitués en particulier par des rouleaux de déflexion qui permettent de modifier la direction de déplacement de la bande métallique. Cette bande métallique est entraînée à grande vitesse et subit une certaine traction longitudinale qui permet d'envelopper partiellement les rouleaux de déflection en exerçant sur ces rouleaux une certaine force radiale et de contrôler avec précision sa position entre les électrodes lors de son passage.

Or, on a observé qu'au-delà d'une certaine vitesse de la bande voisine de 500 m/mn, il n'y a plus un contact réel et efficace entre la bande et le rouleau de déflection, ce qui se traduit par un mauvais guidage de la bande qui «flotte» sur la surface du rouleau et un couplage insuffisante entre le rouleau et la bande, en particulier lorsque celui-ci assure la mise en traction et/ou l'entraînement de la bande.

Cette perte de contact entre la bande et le rouleau est due au fait qu'une partie de liquide est entraînée dans la zone de contact entre la bande et la surface du rouleaux et forme une couche de fluide qui diminue l'adérence. Ce phénomène appelé «aquaplanning» est d'autant plus marqué que la vitesse de la bande est plus grande. Ce phénomène interdit, en pratique, l'utilisation de vitesses de défilement de la bande métallique dans des bacs de dégraissage électrolytique supérieures à 500 m/mn.

Pour remédier à ce phénomène, on a imaginé d'usiner des rainures circonférentielles sur la surface latérale des rouleaux de déflexion, ce qui a pour résultat de diminuer l'aquaplanning entre la bande et le rouleau par un phénomène un peu analogue à celui qui est à la base de la meilleure adhérence des pneus pluie à dessins spéciaux des véhicules automobiles. Avec des rouleaux de déflexion rainurés, on a pu porter la vitesse limite des bandes métalliques dans des installations de dégraissage électrolytique à une valeur comprise entre 600 et 700 m/mn. Un exemple est donné par le brevet allemand N° DE-A-2 147 182.

Au-delà de cette vitesse cependant, l'aquaplanning réapparaît, ce qui limite d'autant les possibilités des installations de dégraissage électrolytique.

Le but de l'invention est donc de proposer un procédé et un dispositif permettant de maintenir la bande parfaitement appliquée sur le rouleaux même à de très grandes vitesses de circulation, supérieures à 700 m/mn, par exemple.

Dans ce but, on introduit au voisinage de la surface du rouleaux, et au moins en amont de la zone de contact entre la bande et le rouleaux, dans le sens de défilement, une certaine quantité de gaz insoluble dans le liquide et susceptible de se mélanger avec la partie de liquide entraînée pour former un fluide compressible dans la zone de contact, entre la bande et le rouleau.

La quantité de gaz introduite doit être simplement suffisante pour rendre le fluide entraîné dans la zone de contact assez compressible pour qu'un contact parfait soit maintenu entre la bande et le rouleau.

Le gaz peut être introduit par injection directe au voisinage de la surface du rouleau sous une pression juste supérieure à la pression hydrostatique du liquide, à l'endroit de l'injection.

Mais il est particulièremenmt avantageux de produire directement le gaz à l'endroit voulu par électrolyse. A cet effet, il peut être suffisant d'utiliser une seule électrode immergée dans le liquide, au voisinage de la bande, immédiatement en amont de la zone de contact.

Afin de bien faire comprendre l'invention, on va maintenant décrire à titre d'exemple non limitatif, en se référant aux figures jointes en annexe, un exemple de mise en œuvre du procédé suivant l'invention, dans une installation de dégraissage électrolytique d'une bande métallique.

Fig. 1 est une vue en coupe par un plan vertical de la partie d'entrée d'un bac de dégraissage électrolytique pour la mise en œuvre du procédé suivant l'invention et suivant un premier mode de réalisation;

Fig. 2 est une vue en coupe longitudinale partielle d'un rouleau de défexion immergé dans le bac de dégraissage, représenté à la fig. 1;

Fig. 3 est une vue en coupe par un plan vertical de la partie d'entrée d'un bac de dégraissage électrolytique, pour la mise en œuvre du procédé, suivant l'invention et suivant un second mode de réalisation;

Fig. 4 est une vue en coupe longitudinale partielle d'un rouleau de déflexion du bac de dégraissage électrolytique représenté à la fig. 3.

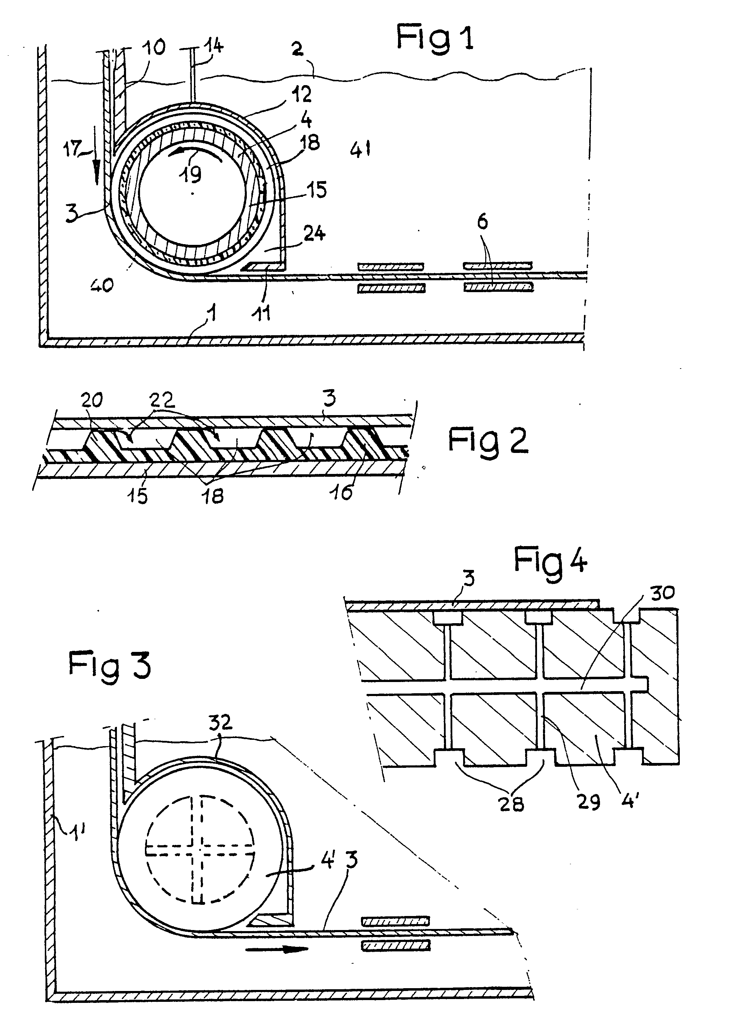

Sur la fig. 1, on voit la partie d'entrée d'un bac 1 de dégraissage électrolytique rempli d'une solution alcaline jusqu'au niveau 2. Une bande métallique 3 venant d'une installation disposée en amont du dégraissage électrolytique pénètre dans le liquide électrolytique avec une direction de déplacement verticale. Cette bande 3 passe sur un rouleau de déflexion 4 à axe horizontal, monté à l'intérieur du bac 1 et entièrement immergé dans le liquide électrolytique.

La bande 3 enveloppe partiellement le rouleau 4 sur une zone de contact 40 et est maintenue en traction, de façon à rester en contact avec le rouleau 4 lors de son déplacement à grande vitesse dans le bac.

En aval du rouleau 4, la bande 3 passe entre des électrodes planes et parallèles 6 disposées suivant plusieurs batteries successives sur le parcours de la bande.

Selon un mode de réalisation préférentiel de l'invention, des électrodes supplémentaires planes 10 et 11 sont disposées en vis-à-vis de la face de la bande 3 venant en contact avec le rouleau 4 respectivement, immédiatement en amount et immédiatement en aval de la zone de contact 40 du rouleau. Ces électrodes sont reliées mécaniquement et électriquement par un capot 12 enveloppant le rouleau 4 sur sa partie 41 non recouverte par la bande 3.

Les électrodes 6 ainsi que les électrodes 10 et 11 sont alimentées en courant électrique et sont pour cela reliées à l'une des bornes d'un générateur électrique dont l'autre borne est reliée à une pièce conductrice en contact avec la bande 3, en amount du bac de dégraissage 1. En particulier, les électrodes 10 et 11 sont alimentées par un câble électrique 14 relié au capot 12.

La bande 3 d'une part, et les électrodes 10, 11 et 6 d'autre part, constituent donc des électrodes antagonistes entre lesquelles se produit l'électrolyse de la solution alcaline contenue dans le bac 1. Il se produit donc, lors du passage de la bande dans le bac, un dégagement gazeux d'une part, sur la bande 3 et d'autre part, sur les électrodes 10, 11 et 6.

En se reportant aux fig. 1 et 2, on voit que le rouleau 4 est constitué par une enveloppe métallique 15 recouverte par un revêtement de caoutchouc 16 résistant à la solution alcaline. De façon connue, ce revêtement comporte sur sa surface externe constituant la surface latérale de contact du rouleau déflecteur 4, des rainures circonférentielles 18 écartées les unes des autres et réparties sur la longueur du rouleau.

Le gaz formé sur l'électrode 10 et sur la bande 3 immédiatement en amount du rouleau 4, est entraîné avec une certaine quantité d'électrolyte entre la bande 3 et la surface latérale rainurée du rouleau 4, lors du déplacement à très grande vitesse de la bande 3 suivant la flèche 17 et du rouleau 4 dans le sens de la flèche 19. On sait qu'il en résulte un entraînement d'une partie du liquide qui s'introduit dans la zone de contact 40, entre la bande et le rouleau, et en particulier dans les rainures 18 de la surface latérale de ce rouleau. Les forces radiales exercées entre le rouleau et la bande 3 produisent un placage de la bande sur le rouleau; elles chassent et compriment le liquide entraîné qui, jusqu'à présent, pouvait donc former une couche supprimant l'adhérence entre le sommet des cannelures 20 séparant les rainuires 18 et la bande 3, vers l'espace intérieur des rainures 18, suivant les flèches 22. Grâce à l'invention, ce phénomène ne se produit pas car le fluide composant la couche qui aurait tendance à se former dans la zone de contact 40, lorsque la bande et le rouleau sont animés d'une très grande vitesse, est devenu compressible puisqu'il est constitué par un mélange de gaz et de liquide. Ce fluide compressible peut donc être facilement chassé et comprimé dans l'espace intérieur des rainures 18, ce qui n'était pas le cas dans les procédés selon l'art antérieur, où ce fluide était constitué par un liquide non compressible. Des forces radiales limitées sont donc suffisantes pour assurer une mise en contact parfaite de la bande 3 avec le rouleau 4, même à très grande vitesse.

La production de gaz au voisinage de la surface du rouleau 4 peut être accrue par l'electrode 11 placé à l'aval de la zone de contact 40 qui produit un dégagement gazeux dans l'espace 24 entre le capot 12 et le rouleau 4, immédiatement en aval de celui-ci. Ce dégagement gazeux ramené par le capot 12 dans l'espace amount est également entraîné dans les rainures 18 du rouleau lors de la rotation à très grande vitesse de celui-ci. Enfin, le gaz contenu dans les rainures 18 se maintient dans celles-ci en grande partie grâce au capot 12, et peut être même recyclé au cours de la rotation du rouleau déflecteur. Il existe donc autour du rouleau 4 une zone limitée par le capot 12 et la bande 3 dans laquelle la porportion de gaz dans le liquide est très forte et de laquelle le gaz ne peut s'échapper qu'en faible quantité. D'une façon générale, la quantité de gaz produite par les électrodes 10 et 11 devra simplement être suffisante pour rendre compressible le fluide entraîné.

Le procédé et le dispositif suivant l'invention ont permis d'atteindre des vitesses de la bande égales ou supérieures à 1000 m/mn sans apparition de l'aquaplanning.

Le mode de réalisation par électrolyse qui vient d'être décrit, est particulièrement avantageux dans le cas de traitements électrolytiques, mais l'invention peut également trouver une application chaque fois que l'on fait circuler une bande à grande vitesse dans un liquide. Il est, en effet, toujours possible d'introduire un gaz insoluble dans le liquide par injection directe au voisinage du rouleau, de façon qu'une quantité suffisante de gaz se mélange au liquide entraîné pour le rendre compressible. A cet effet, on peut utiliser le mode de réalisation représenté sur les fig. 3 et 4 où l'on voit une variante de réalisation 4' du rouleau 4. Celui-ci est constitué par un cylindre d'acier dont la surface latérale venant en contact avec la bande 3 est usinée pour constituer des rainures circonférentielles 28 communiquant chacune par des canaux radiaux 29 avec un canal axial 30 communiquant lui-même à l'une des extrémités du rouleau 4' non représentée avec une alimentation en gaz insoluble dans le liquide électrolyte remplissant le bac 1'. On obtient donc un effet analogue à celui obtenu grâce au dispositif représenté sur les fig. 1 et 2, sans électrode analogue aux électrodes 10 et 11. Il est cependant nécessaire de prévoir un capot 32 entourant le rouleau sur la plus grande partie de sa surface latérale non recouverte par la bande 3. Le fluide remplissant les rainures 28 est en effet compressible grâce à l'introduction de gaz par les canaux 30 et 29 et la couche de liquide tendant à se former entre les parties en saillie du rouleau 4' séparant les rainures 28 et la bande 3 peut être chassée dans les rainures 28 par la force radiale exercée entre la bande métallique 3 et le rouleau 4'.

La pression d'injection du gaz doit être simplement supérieure à la pression hydrostatique au point d'injection pour que le gaz se dégage, le débit étant réglé pour rendre le mélange suffisamment compressible. Bien entendu, il faut éviter que la pression du gaz ne décolle la bande du rouleau par effet de coussin d'air, ce qui conduirait à un effet inverse de celui recherché.

On voit que les principaux avantages du procédé et des dispositifs selon l'invention sont de permettre de faire défiler la bande à très grande vitesse dans le bac de dégraissage, sans apparition d'aquaplanning, c'est-à-dire sans perte d'adhérence entre la bande et le ou les rouleaux de déflexion immergés dans le bac de dégraissage.

C'est ainsi qu'on peut imaginer d'autres moyens et procédés pour introduire un gaz dans le liquide au voisinage de la surface latérale de contact du rouleau de déflexion. On peut par exemple imaginer l'utilisation d'un simple tube alimenté en gaz insoluble dans l'électrolyte débouchant au voisinage de la surface du rouleau de déflexion, immédiatement en amont de ce rouleau.

Le rouleau peut présenter des rainures circonférentielles d'une forme quelconque à partir du moment où ces rainures sont réparties sur toute la longueur du rouleau venant en contact avec la bande.

Enfin, le procédé et le dispositif suivant l'invention peuvent être utilisés non seulement dans le cas du dégraissage électrolytique de bandes métalliques, mais encore dans le cas du décapage ou dans le cas de tout autre traitement d'une bande métallique ou en un matériau non métallique passant à très grande vitesse dans un liquide de traitement et venant en contact avec au moins un rouleau de déflexion immergé dans ce liquide.

## Revendications

1. Procédé de mise en contact avec un rouleau de déflexion d'une bande circulant à grande vitesse dans un liquide (2) contenu dans un bac (1) muni d'au moins un rouleau de déflexion (4) de la bande (3), cette dernière étant soumise à une traction et enveloppant partiellement la surface du rouleau, une partie de liquide étant entrainée dans la zone de contact (40) entre la bande (3) et le rouleau (4), caractérisé par le fait que l'on introduit au voisinage de la surface du rouleau (4) et au moins en amont de la zone de contact (40) dans le sens du défilement, une certaine quantité de gaz insoluble dans le liquide et susceptible de se mélanger avec la partie de liquide entraînée pour former un fluide compressible entre la bande (3) et le rouleau (4), la quantité de gaz introduite étant juste suffisante pour maintenir un contact parfait sans perte d'adhérence, entre la bande et le rouleau par compression du fluide entraîné.

2. Procédé de mise en contact suivant la revendication 1, caractérisé par le fait que le liquide (2) est un électrolyte et que le gaz est obtenu par électrolyse du liquide (2) au voisinage de la surface latérale du rouleau (4).

3. Procédé de mise en contact suivant la revendication 1, caractérisé par le fait que la bande (3) est une bande métallique.

4. Procédé de mise en contact selon la revendication 1, caractérisé par le fait que le gaz insoluble est injecté dans le liquide (2) sous une pression seulement un peu supérieure à la pression hydrostatique du liquide (2) à l'endroit de l'injection.

5. Dispositif de mise au contact d'une bande avec un rouleau de déflexion, dans une installation de traitement de bandes comprenant un bac (1) rempli d'un liquide (2) de traitement et muni d'au moins un rouleau de déflexion (4) de la bande (3) placé dans le liquide (2), la bande (3) étant soumise à une traction et circulant à grande vitesse en enveloppant partiellement la surface du rouleau sur une zone de contact (40), caractérisé par le fait qu'il comprend des moyens (11, 30) d'introduction d'un gaz dans le liquide (2) au voisinage de la surface du rouleau et au moins en amont de la zone de contact (40), dans le sens de défilement de la bande.

6. Dispositif de mise au contact selon la revendication 5, caractérisé par le fait que les moyens d'introduction de gaz sont constitués par au moins une électrode (10) ménagée dans le liquide et disposée au voisinage de la bande (3) immédiatement en amont de la zone de contact.

7. Dispositif de mise au contact selon la revendication 5, caractérisé par le fait que les moyens d'introduction de gaz sont constitués de deux électrodes (10, 11) placées au voisinage de la bande (3) respectivement, immédiatement en amont et immédiatement en aval de la zone de contact et sont reliées mécaniquement et électriquement par un capot (12) entourant le rouleau (4) suivant la partie de la surface latérale non enveloppée par la bande (3).

8. Dispositif de mise au contact selon la revendication 5, dans lequel le rouleau (4) est muni de rainures circonférentielles espacées, caractérisé par le fait que les moyens d'introduction de gaz sont constitués par un circuit d'alimentation des rainures en gaz sous pression comportant au moins un canal (30) ménagé dans l'axe du rouleau (4), alimenté en gaz et dans lequel débouchent les extrémités de canaux radiaux (29) de distribution débouchant à leur autre extrémité dans le fond des rainures (28).

## Patentansprüche

1. Verfahren zum Inkontaktbringen eines Bandes mit einer Umlenkwalze, wobei das Band mit einer grossen Geschwindigkeit in einer Flüssigkeit (2) umläuft, die in einem Behälter (1) enthalten ist, der mit mindestens einer Umlenkwalze (4) für das Band (3) ausgestattet ist, wobei das Band einem Zug unterworfen ist und teilweise die Oberfläche der Walze umhüllt, wobei ein Teil der Flüssigkeit in die Kontaktzone (40) zwischen dem Band (3) und der Walze (4) mitgenommen wird, dadurch gekennzeichnet, dass man in die Nachbarschaft der Oberfläche der Walze (4) und mindestens aufstromig der Kontaktzone (40) in Abspulrichtung eine gewisse Menge unlösliches Gas in die Flüssigkeit einführt, das geeignet ist, sich mit dem mitgenommenen Teil der Flüssigkeit zu mischen, zur Bildung eines Kompressiblen Fluids zwischen dem Band (3) und der Walze (4), wobei die zugeführte Gasmenge gerade ausreicht, um einen vollkommenen Kontakt ohne Adhäsionsverlust zwischen dem Band und der Walze durch Kompression des mitgenommenen Fluids aufrechtzuerhalten.

2. Verfahren zum Inkontaktbringen gemäss Anspruch 1, dadurch gekennzeichnet, dass die Flüssigkeit (2) ein Elektrolyt ist und dass das Gas durch Elektrolyse der Flüssigkeit (2) in der Nähe der seitlichen Oberfläche der Walze (4) erhalten wird.

3. Verfahren zum Inkontaktbringen nach Anspruch 1, dadurch gekennzeichnet, dass das Band (3) ein metallisches Band ist.

4. Verfahren zum Inkontaktbringen nach Anspruch 1, dadurch gekennzeichnet, dass das unlösliche Gas in die Flüssigkeit (2) unter einem Druck eingespritzt wird, der nur wenig über dem hydrostatischen Druck der Flüssigkeit (2) an der Injektionsstelle liegt.

5. Vorrichtung zum Inkontaktbrongen eines Bandes mit einer Umlenkwalze in einer Anlage zur Behandlung von Bändern mit einem Behälter (1), der mit einer Behandlungsflüssigkeit (2) gefüllt und mindestens einer Umlenkwalze (4) für das Band (3) ausgestattet ist, welche in der Flüssigkeit (2) angeordnet ist, wobei das Band (3) einem Zug unterworfen ist und mit einer grossen Geschwindigkeit unter teilweisem Umhüllen der Oberfläche der Walze an einer Kontaktzone (40) umläuft, dadurch gekennzeichnet, dass sie Mittel (11, 30) zum Einführen eines Gases in die Flüssigkeit (2) in der Nähe der Oberfläche der Walze und mindestens aufstromig der Kontaktzone (40) im Abspulsinne des Bandes aufweist.

6. Vorrichtung zum Inkontaktbringen nach Anspruch 5, dadurch gekennzeichnet, dass die Gaszufuhrmittel durch mindestens eine Elektrode (10) gebildet sind, welche in der Flüssigkeit angeordnet ist und in der Nähe des Bandes (3) unmittelbar aufstromig der Kontaktzone angeordnet ist.

7. Vorrichtung zum Inkontaktbringen nach Anspruch 5, dadurch gekennzeichnet, dass die Zuführmittel für das Gas aus zwei Elektroden (10, 11) bestehen, die in der Nähe des Bandes (3) unmittelbar aufstromig bzw. unmittelbar abstromig der Kontaktzone angeordnet sind und mechanisch und elektrisch durch eine Haube (12) verbunden sind, welche die Walze (4) entlang dem Teil der seitlichen Oberfläche umgibt, welcher nicht durch das Band (3) umhüllt ist.

8. Vorrichtung zum Inkontaktbringen nach Anspruch 5, bei welcher die Walze (4) mit am Umfang im Abstand angeordneten Rillen versehen ist, dadurch gekennzeichnet, dass die Gaszuführmittel durch einen Versorgungskreislauf aus Druckgasrillen gebildet sind, der mindestens einen Kanal (30) aufweist, der in der Achse der Walze (4) angeordnet ist und mit Gas versorgt ist und in welchem die Enden der radialen Verteilerkanäle (29) münden, die an ihrem anderen Ende im Grund der Rillen (28) münden.

## Claims

1. Process for bringing into contact with a diverting roll a strip travelling at a high speed in a liquid (2) held in a tank (1) equipped with at least one roll for diverting (4) the strip (3), the latter being subjected to a traction and partially enclosing the surface of the roll, a part of the liquid being entrained into the contact zone (40) between the strip (3) and the roll (4), characterized in that a certain quantity of gas which is insoluble in the liquid and capable of mixing with the entrained part of the liquid is introduced in the vicinity of the surface of the roll (4) and at least upstream of the contact zone (40) in the direction of travel, to form a compressible fluid between the strip (3) and the roll (4), the quantity of gas introduced being just sufficient to maintain perfect contact, without loss of adhesion, between the strip and the roll, by compressing the entrained fluid.

2. Process for bringing into contact according to Claim 1, characterized in that the liquid (2) is an electrolyte and the gas is obtained by electrolysis of the liquid (2) in the vicinity of the side surface of the roll (4).

3. Process for bringing into contact according to Claim 1, characterized in that the strip (3) is a metal strip.

4. Process for bringing into contact according to Claim 1, characterized in that the insoluble gas is injected into the liquid (2) under a pressure which is only slightly greater than the hydrostatic pressure of the liquid (2) at the injection point.

5. Device for bringing a strip into contact with a diverting roll, in a plant for processing strips comprising a tank (1) filled with a process liquid (2) and equipped with at least one roll for diverting (4) the strip (3) which is placed in the liquid (2), the strip (3) being subjected to a traction and traveling at a high speed, partly enclosing the surface of the roll over a contact zone (40), characterized in that it comprises means (11, 30) for introducing a gas into the liquid (2) in the vicinity of the surface of the roll and at least upstream of the contact zone (40), in the direction of travel of the strip.

6. Device for bringing into contact according to Claim 5, characterized in that the means for introducing gas consist of at least one electrode (10) arranged in the liquid and placed in the vicinity of the strip (3) immediately upstream of the contact zone.

7. Device for bringing into contact according to Claim 5, characterized in that the means for introducing gas consist of two electrodes (10, 11) placed in the vicinity of the strip (3) immediately upstream and immediately downstream of the contact zone, respectively, and are connected mechanically and electrically by a hood (12) surrounding the roll (4) along the part of the side surface which is not enclosed by the strip (3).

8. Device for bringing into contact according to Claim 5, in which the roll (4) is equipped with spaced circumferential grooves, characterized in that the means for introducing gas consist of a circuit for supplying the grooves with gas under pressure comprising at least one channel (30) provided in the axis of the roll (4), supplied with gas, and into which there open the ends of radial distribution channels (29) whose other ends open into the bottom of the grooves (28).

Fig 1

Fig 2

Fig 3

Fig 4